# EUROPEAN PATENT SPECIFICATION

(11) **EP 4 636 686 B1**
(45) Date of publication and mention of the grant of the patent: **23.09.2026**
(21) Application number: 25169925.2
(22) Date of filing: 11.04.2025
(51) Int. Cl.: G06T 7/00

(54) **METHOD AND SYSTEM FOR PERFORMING ELECTRODE TAB FOLDING INSPECTION**
VERFAHREN UND SYSTEM ZUR DURCHFÜHRUNG EINER ELEKTRODENLASCHENFALTINSPEKTION
PROCÉDÉ ET SYSTÈME POUR EFFECTUER UNE INSPECTION DE PLIAGE DE LANGUETTE D'ÉLECTRODE

(30) Priority: 18.04.2024 KR 20240052371
(43) Date of publication of application: 22.10.2025
(73) Proprietor: SAMSUNG SDI CO., LTD., Yongin-si, Gyeonggi-do 17084 (KR)
(72) Inventor: LEE, DONGWOO, Yongin-Si, Gyeonggi-do 17084 (KR); LEE, CHORONG, Yongin-Si, Gyeonggi-do 17084 (KR); WOO, SANGBUM, Yongin-Si, Gyeonggi-do 17084 (KR); SONG, JINHO, Yongin-Si, Gyeonggi-do 17084 (KR)
(74) Representative: Gulde & Partner

(56) References cited:
- CN-A- 109 741 323
- CN-A- 115 839 959
- US-A1- 2023 064 943
- US-A1- 2025 095 135

## Description

### FIELD

The present disclosure relates to methods and systems for inspecting electrode tab folding. More particularly, the present disclosure relates to methods and systems for performing an electrode tab folding inspection by dividing an electrode tab formed on an electrode plate into a plurality of regions through vision inspection and determining whether the width of each region is within a reference width.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a cathode and an anode, a case accommodating the same, and electrode terminals connected to the electrode assembly.

The above information disclosed in this Background section is for enhancement of understanding of the background of the present disclosure, and therefore, it may contain information that does not constitute related (or prior) art.

CN115839959, CN109741323, or US2023/064943 represent related background art, disclosing image-based detection and analysis of battery tabs or poles for inspection purposes in the field of industrial battery production.

### SUMMARY

The present disclosure provides a method for inspecting electrode tab folding, a computer program stored on a recording medium, and a device (system) to solve the problems as described above.

These and other aspects and features of the present disclosure will be described in or will be apparent from the following description of embodiments of the present disclosure.

According to one or more embodiments of the present disclosure, a method of inspecting electrode tab folding performed by at least one processor, may include obtaining an image that has captured an electrode plate on which an electrode tab is formed, wherein the image comprises an electrode plate region and an electrode tab region, dividing the electrode tab region in the image into a plurality of regions, and performing an electrode tab folding inspection based on a width of the electrode tab region in each of the plurality of regions.

In one or more embodiments, the plurality of regions comprises a first region, a second region, and a third region, and the performing the electrode tab folding inspection may include determining that the electrode plate is defective, in response to determining that a width of the electrode tab region in the first region is less than a predetermined first width, that a width of the electrode tab region in the second region is less than a predetermined second width, or that a width of the electrode tab region in the third region is less than a predetermined third width.

In one or more embodiments, the predetermined first width, the predetermined second width, and the predetermined third width are different from one another.

In one or more embodiments, the first region is connected to the electrode plate region, the second region is disposed between the first region and the third region, the predetermined second width is smaller than the predetermined first width, and the predetermined third width is smaller than the predetermined second width.

In one or more embodiments, dividing into the plurality of regions may include determining a plurality of straight lines associated with an outline of the electrode tab region, and dividing the electrode tab region into a predetermined number of regions based on the plurality of straight lines.

In one or more embodiments, determining the plurality of straight lines may include determining a first straight line associated with one side of the electrode plate region, determining a second straight line and a third straight line associated with a height of the electrode tab region, and determining a fourth straight line that is parallel to the first straight line and is associated with an uppermost point of the electrode tab region.

In one or more embodiments, determining the first straight line may include identifying a first point and a second point on the one side of the electrode plate region, and determining the first straight line by connecting the first point and the second point, and wherein the electrode tab region is connected to the electrode plate region on the one side.

In one or more embodiments, determining the second straight line and the third straight line may include determining a first intersection and a second intersection where the first straight line intersects two distinct points on the outline of the electrode tab region respectively, determining a third intersection spaced apart from the first intersection by a predetermined distance in a direction perpendicular to the first straight line, determining a fourth intersection spaced apart from the second intersection by the predetermined distance in the direction perpendicular to the first straight line, determining the second straight line by connecting the first intersection and the third intersection, and determining the third straight line by connecting the second intersection and the fourth intersection.

In one or more embodiments, determining the fourth straight line may include identifying the uppermost point of the electrode tab region that is tangent to the second straight line or the third straight line, and determining the fourth straight line that passes through the uppermost point and is parallel to the first straight line.

In one or more embodiments, dividing the electrode tab region into the predetermined number of regions based on the plurality of straight lines may include dividing the electrode tab region into N+1 regions by placing N predetermined dividing lines between the first straight line and the fourth straight line, wherein the N is a natural number.

In one or more embodiments, N is equal to 2, dividing the electrode tab region into the N+1 regions may include determining a first dividing line spaced apart from the fourth straight line by a predetermined first distance in a direction of the electrode plate region, and determining a second dividing line spaced apart from the fourth straight line by a predetermined second distance in the direction of the electrode plate region, and wherein the first distance is greater than the second distance.

In one or more embodiments, dividing the electrode tab region into the N+1 regions further may include determining the electrode tab region between the first straight line and the first dividing line as a first region, determining the electrode tab region between the first dividing line and the second dividing line as a second region, and determining the electrode tab region between the second dividing line and the fourth straight line as a third region.

In one or more embodiments, the method may further include determining that the electrode plate is defective if a distance between the third straight line and the electrode tab region exceeds a predetermined threshold.

In one or more embodiments, the third straight line is located downstream of the second straight line in a process direction.

In one or more embodiments, the method may further include determining the electrode plate as a target for an electrode tab folding inspection in response to determining that the width of the electrode tab region in the electrode tab region is less than a predetermined reference standard, after the obtaining the image and before dividing.

In one or more embodiments, the plurality of regions comprises a first region and a second region, and wherein the performing the electrode tab folding inspection may include determining an average length of widths of the electrode tab region measured in the first region as a width of the electrode tab in the first region, and determining an average length of widths of the electrode tab region measured in the second region as a width of the electrode tab in the second region.

According to one or more embodiments of the present disclosure, a non-transitory computer-readable recording medium may be provided, storing instructions that, when executed by one or more processors, cause performance of the method.

According to one or more embodiments of the present disclosure, a system for inspecting electrode tab folding, including: an image sensor configured to capture an electrode plate on which an electrode tab is formed, a communication module, a memory, and at least one processor connected to the memory and configured to execute at least one computer-readable program included in the memory, wherein the at least one program comprises instructions for: obtaining an image comprising an electrode plate region and an electrode tab region captured by the image sensor, dividing the electrode tab region in the image into a plurality of regions, and performing an electrode tab folding inspection based on a width of the electrode tab region in each of the plurality of regions.

In one or more embodiments, the plurality of regions may include a first region, a second region, and a third region, and the performing the electrode tab folding inspection may include determining that the electrode plate is defective, in response to determining that a width of the electrode tab region in the first region is less than a predetermined first width, that a width of the electrode tab region in the second region is less than a predetermined second width, or that a width of the electrode tab region in the third region is less than a predetermined third width.

In one or more embodiments, the at least one program may further include instructions for: determining the electrode plate as a target for an electrode tab folding inspection in response to determining that the width of the electrode tab region in the electrode tab region is less than a predetermined reference standard, after obtaining the image and before dividing into the plurality of regions.

According to some embodiments of the present disclosure, if the folding of the electrode tab is within a range that is determined to have no or little effect on the welding quality of the electrode plate and the electrode terminals based on the area required for the welding process for each height section of the electrode tab, the corresponding electrode plate can be reclassified as a non-defective product to thereby improve the productivity of the electrode plate.

According to some embodiments of the present disclosure, it is possible to prevent product defects due to folding caused by unknown impacts other than the process by determining that the corresponding electrode plate is defective if it is determined that the electrode tab is folded in the direction opposite to the process direction.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram showing an example of electrode plates on which electrode tabs and are formed.
FIG. 2 is a flowchart showing an example of an electrode tab inspection method in accordance with some embodiments of the present disclosure.
FIG. 3 is a diagram for describing a method for measuring a width of an electrode tab region based on an electrode plate image in accordance with some embodiments of the present disclosure.
FIG. 4 is a flowchart showing an example of an electrode tab folding inspection method in accordance with some embodiments of the present disclosure.
FIG. 5 is a diagram for generally describing a method of performing an electrode tab folding inspection in accordance with some embodiments of the present disclosure.
FIG. 6 is a diagram showing an example of determining a first straight line associated with one side of the electrode plate region based on the electrode plate image.
FIG. 7 is a diagram showing an example of determining a second straight line, a third straight line, and a fourth straight line based on the electrode plate image.
FIG. 8 is a diagram for describing a method of determining dividing lines that divide the electrode tab region based on the electrode plate image in accordance with some embodiments of the present disclosure.
FIG. 9 is a diagram for describing a method of dividing the electrode tab region into a plurality of regions by using the dividing lines based on the electrode plate image in accordance with some embodiments of the present disclosure.
FIG. 10 is a diagram for describing a method of determining whether an electrode plate is defective by measuring electrode tab region widths in each of the plurality of regions based on the electrode plate image in accordance with some embodiments of the present disclosure.
FIG. 11 is a diagram for describing an example of determining that an electrode plate is defective if an electrode tab is folded in a direction opposite to a process direction in accordance with some embodiments of the present disclosure.
FIG. 12 is a flowchart showing an example of an electrode tab folding inspection method in accordance with some embodiments of the present disclosure.
FIG. 13 is a block diagram showing the internal configuration of a processor in accordance with some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Electrode plates are components of an electrode assembly and may be divided into a cathode plate and an anode plate. The cathode plate may be formed by having an electrode active material such as a transition metal oxide applied to an electrode current collector plate formed of a metal foil such as aluminum or an aluminum alloy. In contrast, the anode plate may be formed by having an electrode active material such as graphite or carbon applied to an electrode current collector plate formed of a metal foil such as copper, a copper alloy, nickel, or a nickel alloy. Further, the electrode plates (e.g., the cathode plate and the anode plate) may include electrode tabs, which are regions where no electrode active materials are applied.

The electrode assembly may have a structure in which units each having a separator disposed between the cathode plate and the anode plate are stacked. The electrode assembly may be inserted into a battery case, and the battery case with the electrode assembly inserted therein may be sealed with a cap plate.

The cap plate may include electrode terminals (a cathode terminal and an anode terminal) that are electrically connected to the electrode plates. For example, the cathode terminal of the cap plate may be directly or indirectly connected to the electrode tab of the cathode plate. Further, the anode terminal of the cap plate may be directly or indirectly connected to the electrode tab of the anode plate.

The electrode tab may be electrically connected to the electrode terminals by welding. Conventionally, if folds occurred in the electrode tab during the process, the corresponding electrode plate may altogether be determined as a defective product. However, because there are cases where there is no or little effect on the quality of welding with the electrode terminals even if the electrode tab is folded in part, it is necessary to reclassify such electrode plates as non-defective products. Accordingly, if the folding of the electrode tab is within a range that is determined to have no or little effect on the welding quality of the electrode plate and the electrode terminals based on the area required for the welding process for each height section of the electrode tab, the corresponding electrode plate can be reclassified as a non-defective product to thereby improve the productivity of the electrode plate.

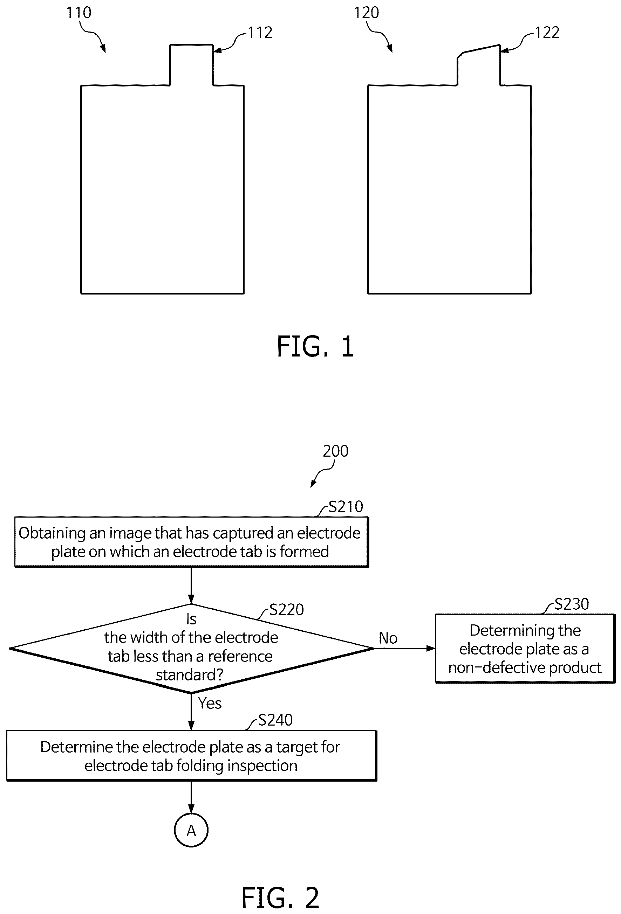

FIG. 1 is a diagram showing an example of electrode plates 110 and 120 on which electrode tabs 112 and 122 are formed. The first electrode plate 110 is an electrode plate having the electrode tab 112 that is not folded. The electrode tab 112 of the first electrode plate 110 may have a constant width from the bottom to the top. The second electrode plate 120 is an electrode plate having the electrode tab 122 that is folded in part. The second electrode plate 120 may be an electrode plate in which a part of the electrode tab 122 is folded during the process.

Conventionally, only the first electrode plate 110 was determined as a non-defective product, and the second electrode plate 120 may be determined as a defective product. However, even for the second electrode plate 120, if the folding of the electrode tab is within a range that is determined to have no or little effect on the welding quality of the electrode plate and the electrode terminals, the corresponding electrode plate can be determined as a non-defective product. In the following, a method for performing an electrode tab folding inspection on the second electrode plate 120 in which the electrode tab is folded in part will be described in detail.

FIG. 2 is a flowchart showing an example of an electrode tab inspection method 200 in accordance with some embodiments of the present disclosure. The method 200 may be performed by a processor (e.g., at least one processor of an information processing system). The method 200 may begin by the processor obtaining S210 an image that has captured an electrode plate on which an electrode tab is formed. The image may include an electrode plate region corresponding to the body of the electrode plate and an electrode tab region corresponding to the electrode tab extending from the electrode plate.

The processor may determine S220 whether the width of the electrode tab region is less than a predetermined reference standard in the electrode tab region. In some embodiments, the predetermined reference standard for the width of the electrode tab region may be determined based on a reference standard for the width of the electrode tab. For example, if the reference standard for the width of the electrode tab is 10 mm, the reference standard for the width of the electrode tab region may be determined to be 10 mm. In another example, when the reference standard for the electrode tab width is 10 mm, the reference standard for the width of the electrode tab region may be the reference standard for the electrode tab width plus/minus a predetermined measurement error, such that the reference standard for the width of the electrode tab region may be for example 9 mm or 11 mm. The examples of the reference standards described above are for convenience of description, and the reference standards and measurement errors for the widths of the electrode tab and electrode tab region are not limited to the specific examples described above.

In response to determining that the width of the electrode tab region is greater than or equal to the predetermined reference standard, the processor may determine S230 that the electrode plate is a non-defective product. In another example, in response to determining that the width of the electrode tab region is less than the predetermined reference standard, the processor may determine S240 the corresponding electrode plate as a target for electrode tab folding inspection.

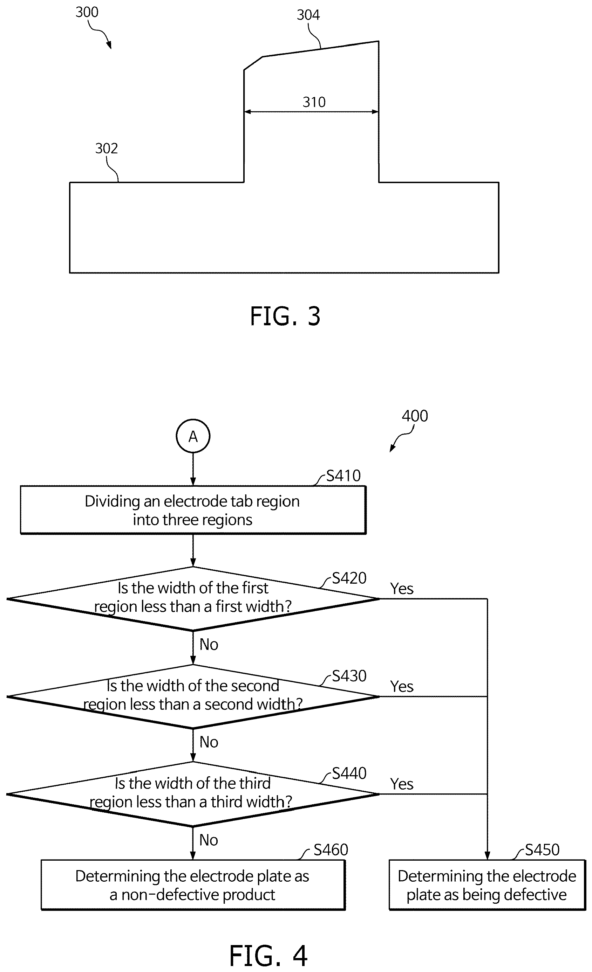

On the electrode plate determined as the target for electrode tab folding inspection, an electrode tab folding inspection for determining whether the width of the electrode tab (or electrode tab region) in the corresponding section for each height section of the electrode tab (or electrode tab region) is within a reference width may be performed. A specific method by which the electrode tab folding inspection is performed will be described later with reference to FIG. 4.

FIG. 3 is a diagram for describing a method for measuring a width 310 of an electrode tab region 304 based on an electrode plate image 300 in accordance with some embodiments of the present disclosure. The electrode plate image 300 may include an electrode plate region 302 corresponding to the body of an electrode plate and an electrode tab region 304 corresponding to an electrode tab extending from the electrode plate. The electrode plate, which is the subject of the electrode plate image 300, may have a part of the electrode tab folded.

According to some embodiments, a processor (e.g., at least one processor of an information processing system) may determine whether the electrode plate is a non-defective product by measuring the width 310 of the electrode tab region 304. For example, if it is determined that the width 310 of the electrode tab region 304 is greater than or equal to a predetermined reference standard, the processor may determine that the corresponding electrode plate is a non-defective product. In contrast, if it is determined that the width 310 of the electrode tab region 304 is less than the predetermined reference standard, the processor may withhold the determination of the corresponding electrode plate as defective and determine it as a target for electrode tab folding inspection.

According to some embodiments, the processor may measure the width of the electrode tab region 304 at a plurality of points in the electrode tab region 304 spaced apart from the electrode plate region 302. In this case, the width 310 of the electrode tab region 304 at the top portion of the electrode tab region 304 may be determined to be less than the predetermined reference standard, and thus, the corresponding electrode plate may be determined as a target for electrode tab folding inspection.

According to some embodiments, the processor may determine the average distance between each point located on both sides of the electrode tab region 304 as the width 310 of the electrode tab region 304. In this case, the width 310 of the electrode tab region 304 is determined to be less than the predetermined reference standard due to the top portion of the electrode tab region 304 where the electrode tab is folded in part, and thus, the corresponding electrode plate may be determined as a target for electrode tab folding inspection.

FIG. 4 is a flowchart showing an example of an electrode tab folding inspection method 400 in accordance with some embodiments of the present disclosure. The electrode tab folding inspection method 400 may be performed on the electrode plate that has been determined as the target for the electrode tab folding inspection according to the method described above (e.g., 200 in FIG. 2). The electrode tab folding inspection method 400 may be performed by a processor (e.g., at least one processor of an information processing system).

According to some embodiments, the processor may divide S410 an electrode tab region in an image into three regions. For example, the processor may divide the electrode tab region into a first region, a second region, and a third region.

The processor may determine S420 whether the width of the electrode tab region in the first region is less than a predetermined first width. The width of the electrode tab region in the first region may be an average of widths measured at a plurality of points in the first region. In response to determining that the width of the electrode tab region in the first region is less than the predetermined first width, the processor may determine S450 that the corresponding electrode plate is defective.

In response to determining that the width of the electrode tab region in the first region is greater than or equal to the predetermined first width, the processor may determine S430 whether the width of the electrode tab region in the second region is less than a predetermined second width. The width of the electrode tab region in the second region may be an average of widths measured at a plurality of points in the second region. In response to determining that the width of the electrode tab region in the second region is less than the predetermined second width, the processor may determine S450 that the corresponding electrode plate is defective.

In response to determining that the width of the electrode tab region in the second region is greater than or equal to the predetermined second width, the processor may determine S440 whether the width of the electrode tab region in the third region is less than a predetermined third width. The width of the electrode tab region in the third region may be an average of widths measured at a plurality of points in the third region. In response to determining that the width of the electrode tab region in the third region is less than the predetermined third width, the processor may determine S450 that the corresponding electrode plate is defective.

In response to determining that the width of the electrode tab region in the third region is greater than or equal to the predetermined third width, the processor may determine S460 that the corresponding electrode plate is a non-defective product.

According to some embodiments, the predetermined first width, the predetermined second width, and the predetermined third width may be different from one another. In other embodiments, at least one of the predetermined first width, the predetermined second width, and the predetermined third width may be different from the others.

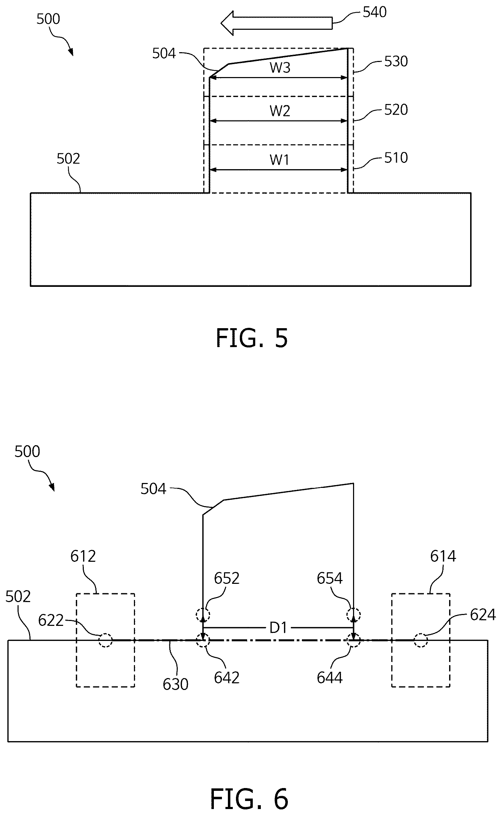

FIG. 5 is a diagram for generally describing a method of performing an electrode tab folding inspection in accordance with some embodiments of the present disclosure. An electrode plate image 500 may include an electrode plate region 502 corresponding to the body of an electrode plate and an electrode tab region 504 corresponding to an electrode tab extending from the electrode plate. The electrode plate, which is the subject of the electrode plate image 500, may have a part of the electrode tab folded.

According to some embodiments, if it is determined that the width of the electrode tab region 504 is less than a predetermined reference standard, a processor (e.g., at least one processor of an information processing system) may withhold the determination of the corresponding electrode plate as being defective and perform an electrode tab folding inspection on the corresponding electrode plate. For example, the width of the electrode tab region 504 may be an average of widths measured at a plurality of points in the corresponding region.

The processor may divide the electrode tab region 504 in the image into a plurality of regions 510, 520, and 530. In the following, an example in which the electrode tab region is divided into three regions will be described for convenience of description. For example, the processor may divide the electrode tab region into a first region 510, a second region 520, and a third region 530. In this case, the first region 510 may be the bottom portion of the electrode tab region 504, the second region 520 may be the middle portion of the electrode tab region 504, and the third region 530 may be the top portion of the electrode tab region 504. In some embodiments, the division of the electrode tab region may be performed after removing the top 0,25 mm, 0,5 mm, 0,75 mm, 1 mm, 1,25 mm or 1,5 mm and bottom 0,25 mm, 0,5 mm, 0,75 mm, 1 mm, 1,25 mm or 1,5 mm from the electrode tab region 504 in consideration of measurement errors. A method of dividing the electrode tab region into a plurality of regions will be described later with reference to FIGS. 5 to 9.

The processor may determine whether widths W1, W2, and W3 of the electrode tab region in each of the plurality of regions 510, 520, and 530 are less than reference standards corresponding to each region. Thereafter, if the width of the electrode tab region in any one of the plurality of regions 510, 520, and 530 is less than the reference standard corresponding to that region, the processor may determine that the corresponding electrode plate is a defective product. For example, the processor may determine whether the width W1 of the electrode tab region in the first region 510 is less than a predetermined first width (e.g., a width according to a standard specification), and determine that the corresponding electrode plate is defective if the width W1 of the electrode tab region is less than the first width. Further, the processor may determine whether the width W2 of the electrode tab region in the second region 520 is less than a predetermined second width (e.g., a width according to a standard specification - 10 mm, - 8 mm, - 6 mm, - 5 mm, - 3 mm or - 2 mm), and determine that the corresponding electrode plate is defective if the width W2 of the electrode tab region is less than the second width. Moreover, the processor may determine whether the width W3 of the electrode tab region in the third region 530 is less than a predetermined third width (e.g., a width according to a standard specification - 15 mm, - 12 mm, - 10 mm, - 8 mm, - 6 mm, - 5 mm), and determine that the corresponding electrode plate is defective if the width W3 of the electrode tab region is less than the third width.

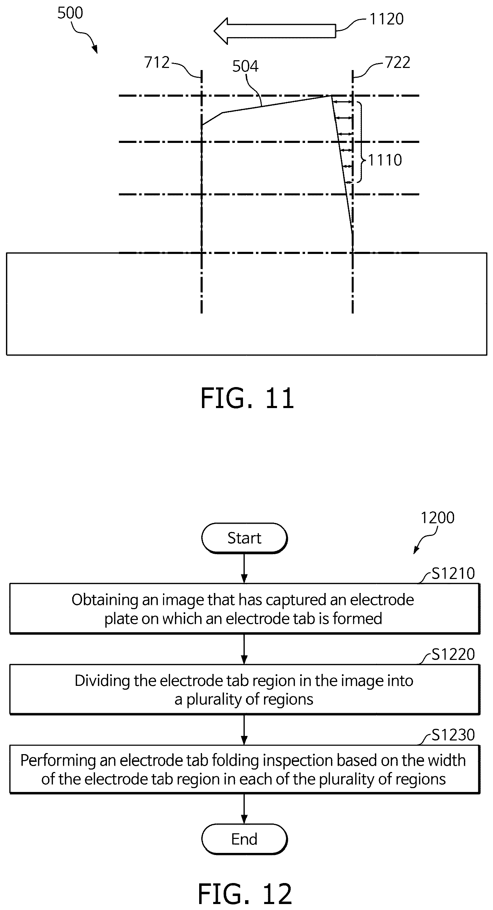

According to some embodiments, the processor may determine that the corresponding electrode plate is defective if it is determined that the electrode tab is folded in a direction opposite to the process direction. Because there is a possibility that the folding might have occurred by an unknown impact other than the process if the electrode tab is folded in the direction opposite to the process direction, the corresponding electrode plate may be determined as being defective in order to prevent product defects resulting therefrom. A detailed description of this will be given later with reference to FIG. 11.

FIGS. 6 to 11 are diagrams illustrating a method of performing an electrode tab folding inspection in accordance with some embodiments of the present disclosure.

FIG. 6 is a diagram showing an example of determining a first straight line 630 associated with one side of the electrode plate region 502 based on the electrode plate image 500. In some embodiments, a processor (e.g., at least one processor of an information processing system) may identify a first point 622 and a second point 624 on the one side of the electrode plate region 502. Here, the one side of the electrode plate region 502 may be the side on which the electrode plate is formed.

The processor may determine a first region of interest 612 located in a first direction (e.g., left-side direction) relative to the electrode tab region 504. Further, the processor may determine a second region of interest 614 located in a second direction (e.g., right-side direction) opposite to the first direction relative to the electrode tab region 504. Here, the first region of interest 612 and the second region of interest 614 may include a portion of the one side of the electrode tab region 504.

The processor may identify an outline within the first region of interest 612 and determine the first point 622 on the corresponding outline. For example, the first point 622 may be a central point or any point on the identified outline. Further, the processor may identify an outline within the second region of interest 614 and determine the second point 624 on the corresponding outline. For example, the second point 626 may be a central point or any point on the identified outline. The method of identifying the first point 622 and the second point 624 on the one side of the electrode plate region 502 is not limited to the embodiments described above, and a variety of methods may be used to identify them.

The processor may determine the first straight line 630 associated with the one side of the electrode plate region 502 by connecting the first point 622 and the second point 624. The first straight line 630 may be used to determine a straight line associated with the height of the electrode tab region 504. For this purpose, the processor may determine a first intersection 642 and a second intersection 644 where the first straight line 630 intersects two distinct points on the outline of the electrode tab region 504 respectively. Thereafter, the processor may determine a third intersection 652 spaced apart from the first intersection 642 by a predetermined distance D1 in a direction perpendicular to the first straight line 630. Similarly, the processor may determine a fourth intersection 654 spaced apart from the second intersection 644 by the predetermined distance D1 in the direction perpendicular to the first straight line 630.

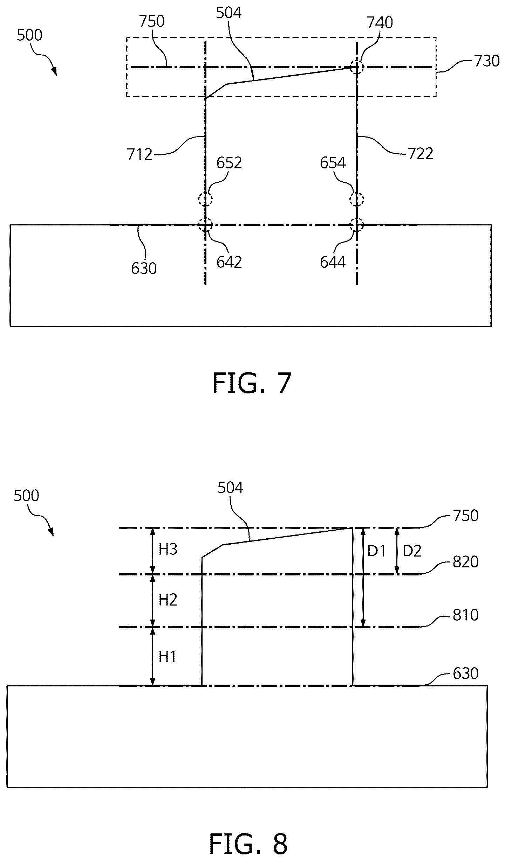

FIG. 7 is a diagram showing an example of determining a second straight line 712, a third straight line 722, and a fourth straight line 750 based on the electrode plate image 500. In some embodiments, a processor (e.g., at least one processor of an information processing system) may determine the second straight line 712 and the third straight line 722 associated with the height of the electrode tab region 504 in the electrode plate image 500. Further, the processor may determine the fourth straight line 750 associated with the uppermost point 740 of the electrode tab region 504 in the electrode plate image 500.

**In** some embodiments, the processor may determine the second straight line 712 by connecting the first intersection 642 and the third intersection 652. Further, the processor may determine the third straight line 722 by connecting the second intersection 644 and the fourth intersection 654. The second straight line 712 and the third straight line 722 may be parallel to each other and perpendicular to the first straight line 630.

The processor may determine the fourth straight line 750 that is parallel to the first straight line 630 and is associated with the uppermost point 740 of the electrode tab region 504. In one example, the processor may determine a third region of interest 730 that includes the top portion of the electrode tab region 504 and identify the uppermost point 740 of the electrode tab region 504 within the third region of interest 730. In this case, the uppermost point 740 may represent a point, which has the highest ordinate value (e.g., y-coordinate value) based on the image coordinate system, in the third region of interest 730. Then, the processor may determine the fourth straight line 750 that passes through the uppermost point 740 and is parallel to the first straight line 630. In another example, the processor may determine a straight line that passes through the uppermost point 740 and is parallel to the first straight line 630, and determine a straight line, which is parallel to that straight line and e.g. up to or exactly 0,25 mm, 0,5 mm, 0,75 mm, 1 mm, 1,25 mm or 1,5 mm away therefrom in the downward direction (in the direction of the electrode plate), as the fourth straight line 750. In other examples, the processor may identify the uppermost point 740 of the electrode tab region 504 that is tangent to the second straight line 712 or the third straight line 722. The method of identifying the uppermost point 740 of the electrode plate region 502 is not limited to the embodiments described above, and a variety of methods may be used to identify it. Thereafter, the processor may determine the fourth straight line 750 that passes through the uppermost point 740 and is parallel to the first straight line 630. The fourth straight line 750 may be perpendicular to the second straight line 712 and the third straight line 722.

FIG. 8 is a diagram illustrating a method of determining dividing lines 810 and 820 that divide the electrode tab region 504 based on the electrode plate image 500 in accordance with some embodiments of the present disclosure. Referring to FIG. 8, the electrode tab region 504 may be divided into three regions by having two predetermined dividing lines placed between the first straight line 630 and the fourth straight line 750. The number of dividing lines placed between the first straight line 630 and the fourth straight line 750 is not limited to the example of FIG. 8, and N dividing lines (where N is a natural number) may be placed between the first straight line 630 and the fourth straight line 750, thereby causing the electrode tab region 504 to be divided into N+1 regions. In some embodiments, the placement of dividing lines may be performed after removing the top e.g. up to or exactly 0,25 mm, 0,5 mm, 0,75 mm, 1 mm, 1,25 mm or 1,5 mm and bottom e.g. up to or exactly 0,25 mm, 0,5 mm, 0,75 mm, 1 mm, 1,25 mm or 1,5 mm from the electrode tab region 504 in consideration of measurement errors.

A processor (e.g., at least one processor of an information processing system) may determine a first dividing line 810 spaced apart from the fourth straight line 750 by a predetermined first distance D1 in the direction of the electrode plate region. Further, the processor may determine a second dividing line 820 spaced apart from the fourth straight line 750 by a predetermined second distance D2 in the direction of the electrode plate region. Here, the first distance D1 may be greater than the second distance D2. For example, if the height of the electrode tab is 9 mm, 10 mm, 12 mm or 15 mm, the first distance D1 may be 3 mm, 4 mm, 6 mm or 9 mm and the second distance D2 may be 1 mm, 2 mm, 4 mm or 7 mm, but are not limited thereto.

The height for each section of the electrode tab region 504 may be determined using the dividing lines 810 and 820 determined in the method described above. The first height H1 may represent the distance between the first straight line 630 and the first dividing line 810. The second height H2 may represent the distance between the first dividing line 810 and the second dividing line 820. The third height H3 may represent the distance between the second dividing line 820 and the fourth straight line 750.

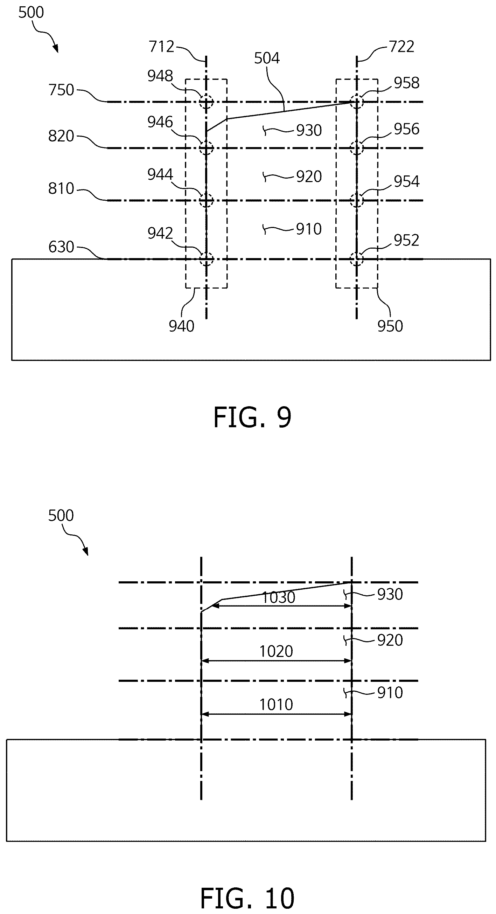

FIG. 9 is a diagram illustrating a method of dividing the electrode tab region into a plurality of regions 910, 920, and 930 by using the dividing lines 810 and 820 based on the electrode plate image 500 in accordance with some embodiments of the present disclosure. According to some embodiments, a processor (e.g., at least one processor of an information processing system) may identify a plurality of intersections 942, 944, 946, 948, 952, 954, 956, and 958 at which the first to fourth straight lines 630, 712, 722, and 750 intersect with the dividing lines 810 and 820 by using regions of interest 940 and 950. For example, the processor may determine a fourth region of interest 940 associated with the second straight line 712, and identify a first intersection 942, a second intersection 944, a third intersection 946, and a fourth intersection 948 based on the fourth region of interest 940. Further, the processor may determine a fifth region of interest 950 associated with the third straight line 722, and identify a fifth intersection 952, a sixth intersection 954, a seventh intersection 956, and an eighth intersection 958 based on the fifth region of interest 950.

According to some embodiments, the processor may divide the electrode tab region 504 into a plurality of regions 910, 920, and 930 by using the plurality of intersections 942, 944, 946, 948, 952, 954, 956, and 958, the first to fourth straight lines 630, 712, 722, and 750, and the dividing lines 810 and 820. For example, the processor may determine the electrode tab region 504 between the first straight line 630 and the first dividing line 810 as a first region 910. Here, the first region 910 may refer to a rectangular region with the first intersection 942, the second intersection 944, the fifth intersection 952, and the sixth intersection 954 as vertices. In another example, the processor may determine the electrode tab region 504 between the first straight line 630 and the first dividing line 810 as the first region 910 after removing the bottom, e.g. 0,5 mm, 0,75 mm, 1 mm, 1,25 mm or 1,5 mm region thereof.

Further, the processor may determine the electrode tab region between the first dividing line 810 and the second dividing line 820 as a second region 920. Here, the second region 920 may refer to a rectangular region with the second intersection 944, the third intersection 946, the sixth intersection 954, and the seventh intersection 956 as vertices. Moreover, the processor may determine the electrode tab region between the second dividing line 820 and the fourth straight line 750 as a third region 930. For example, the third region 930 may refer to a region where the electrode tab region 504 overlaps with a rectangular region having the third intersection 946, the fourth intersection 948, the seventh intersection 956, and the eighth intersection 958 as vertices.

FIG. 10 is a diagram illustrating a method of determining whether an electrode plate is defective by measuring electrode tab region widths 1010, 1020, and 1030 in each of the plurality of regions 910, 920, and 930 based on the electrode plate image 500 in accordance with some embodiment of the present disclosure. A processor (e.g., at least one processor of an information processing system) may measure/determine the electrode tab region widths 1010, 1020, and 1030 in each of the plurality of regions 910, 920, and 930.

In some embodiments, the average length of the widths of the electrode tab region measured in each region 910, 920, and 930 may be determined as the width of the electrode tab in each region 910, 920, and 930. For example, the average length of the widths of the electrode tab region measured at a plurality of points in the first region 910 may be determined as the width 1010 of the electrode tab in the first region. Similarly, the average length of the widths of the electrode tab region measured at a plurality of points in the second region 920 may be determined as the width 1020 of the electrode tab in the second region. Moreover, the average length of the widths of the electrode tab region measured at a plurality of points in the third region 930 may be determined as the width 1030 of the electrode tab in the third region.

The method of measuring the widths 1010, 1020, and 1030 of the electrode tab region in each of the plurality of regions 910, 920, and 930 is not limited to the embodiment described above, but a variety of methods may be used. For example, the minimum of the widths of the electrode tab region measured in each region 910, 920, and 930 may be determined as the width of the electrode tab in that region.

The processor may determine whether the corresponding electrode plate is defective based on the widths 1010, 1020, and 1030 of the electrode tab region in each of the plurality of regions 910, 920, and 930. For example, if the width 1010 of the electrode tab region in the first region 910 is less than a predetermined first width, if the width 1020 of the electrode tab region in the second region 920 is less than a predetermined second width, or if the width of the electrode tab region in the third region 930 is less than a predetermined third width, then the processor may determine that the corresponding electrode plate is defective. For example, if the width of the electrode tab region in any one of the plurality of regions 910, 920, and 930 is less than the predetermined reference width (e.g., the first width, the second width, or the third width), the processor may determine that the corresponding electrode plate is defective.

According to some embodiments, the predetermined first width, the predetermined second width, and the predetermined third width may be different from each other. For example, the first width may be the same as the reference standard (e.g., 10 mm) for the electrode tab of the electrode plate. In other examples, the second width may be determined by subtracting a predetermined first correction value (e.g., -5 mm) from the reference standard (e.g., 10 mm) for the electrode tab of the electrode plate, and the third width may be determined by subtracting a predetermined second correction value (e.g., -10 mm) from the reference standard (e.g., 10 mm) for the electrode tab of the electrode plate. In other embodiments, some of the predetermined first width, the predetermined second width, and the predetermined third width may be the same.

FIG. 11 is a diagram illustrating an example of determining that an electrode plate is defective if an electrode tab is folded in a direction opposite to a process direction in accordance with some embodiments of the present disclosure. According to some embodiments, if it is determined that the electrode tab is folded in the direction opposite to the process direction, a processor (e.g., at least one processor of an information processing system) may determine that the corresponding electrode plate is defective.

According to some embodiments, if the distance between the third straight line 722 and the electrode tab region 504 exceeds a predetermined threshold (e.g., 1 mm), the processor may determine that the corresponding electrode plate is defective. Here, the third straight line 722 may be located downstream of the second straight line 712 based on the process direction 1120.

The processor may measure a plurality of distances 1110 between the third straight line 722 and one side of the electrode tab region 504 adjacent thereto. The processor may determine whether the electrode plate is defective based on the plurality of distances 1110 measured. For example, if any one of the plurality of distances 1110 measured exceeds a predetermined threshold, the processor may determine that the corresponding electrode plate is defective. In another example, if the average of the plurality of distances 1110 measured exceeds a predetermined threshold, the processor may determine that the corresponding electrode plate is defective. Through this, it is possible to prevent product defects due to folding caused by unknown impacts other than the process if the electrode tab is folded in the direction opposite to the process direction.

The method of performing an electrode tab folding inspection by determining whether the width of each of the plurality of regions of the electrode tab is within the reference width as described in FIG. 10, and the method of performing an electrode tab folding inspection by determining whether the electrode tab is folded in the direction opposite to the process direction as described in FIG. 11 may be used in combination. In this case, the two electrode tab folding inspections may be performed in parallel or in sequence.

FIG. 12 is a flowchart showing an example of an electrode tab folding inspection method 1200 in accordance with some embodiments of the present disclosure. The method 1200 may begin by a processor (e.g., at least one processor of an information processing system) obtaining S1210 an image that has captured an electrode plate on which an electrode tab is formed. Here, the image may include an electrode plate region and an electrode tab region.

According to some embodiments, the processor may determine the electrode plate as a target for electrode tab folding inspection in response to determining that the width of the electrode tab region in the electrode tab region is less than a predetermined reference standard.

The processor may perform the electrode tab folding inspection based on an image of the electrode plate determined as the target for the electrode tab folding inspection.

According to some embodiments, the processor may divide S1220 the electrode tab region in the image into a plurality of regions. For example, the processor may determine a plurality of straight lines associated with the outline of the electrode tab region. Thereafter, the processor may divide the electrode tab region into a predetermined number of regions based on the plurality of straight lines.

According to some embodiments, the processor may determine a first straight line associated with one side of the electrode plate region. For example, the processor may identify a first point and a second point on the one side of the electrode plate region. The processor may determine the first straight line by connecting the first point and the second point. Here, the electrode tab region may be connected to the electrode plate region on the one side.

According to some embodiments, the processor may determine a second straight line and a third straight line associated with the height of the electrode tab region. For example, the processor may determine a first intersection and a second intersection where the first straight line and the outline of the electrode tab region intersect. The processor may determine a third intersection spaced apart from the first intersection by a predetermined distance in a direction perpendicular to the first straight line, and a fourth intersection spaced apart from the second intersection by a predetermined distance in the direction perpendicular to the first straight line. The processor may determine the second straight line by connecting the first intersection and the third intersection, and determine the third straight line by connecting the second intersection and the fourth intersection.

According to some embodiments, the processor may determine a fourth straight line that is parallel to the first straight line and is associated with the uppermost point of the electrode tab region. For example, the processor may identify the uppermost point of the electrode tab region that is tangent to the second straight line or the third straight line. The processor may determine the fourth straight line that passes through the uppermost point and is parallel to the first straight line.

According to some embodiments, the processor may divide the electrode tab region into N+1 regions by placing N predetermined dividing lines (where N is a natural number) between the first straight line and the fourth straight line. For example, if N is 2, the processor may determine a first dividing line spaced apart from the fourth straight line by a predetermined first distance in the direction of the electrode plate region. Further, the processor may determine a second dividing line spaced apart from the fourth straight line by a predetermined second distance in the direction of the electrode plate region. In this case, the first distance may be greater than the second distance.

According to some embodiments, the processor may determine the electrode tab region between the first straight line and the first dividing line as a first region. Further, the processor may determine the electrode tab region between the first dividing line and the second dividing line as a second region. Moreover, the processor may determine the electrode tab region between the second dividing line and the fourth straight line as a third region.

Thereafter, the processor may perform S 1230 an electrode tab folding inspection based on the width of the electrode tab region in each of the plurality of regions.

According to some embodiments, the processor may determine that the electrode plate is defective, in response to determining that the width of the electrode tab region in the first region is less than a predetermined first width, that the width of the electrode tab region in the second region is less than a predetermined second width, or that the width of the electrode tab region in the third region is less than a predetermined third width. In this case, the first region may be connected to the electrode plate region, and the second region may be disposed between the first region and the third region.

In some embodiments, the average length of the widths of the electrode tab region measured in each of the plurality of regions may be determined as the width of the electrode tab region. For example, the processor may determine the average length of the widths of the electrode tab region measured in the first region as the width of the electrode tab in the first region. Further, the processor may determine the average length of the widths of the electrode tab region measured in the second region as the width of the electrode tab in the second region. Moreover, the processor may determine the average length of the widths of the electrode tab region measured in the third region as the width of the electrode tab in the third region.

In some embodiments, the predetermined first width, the predetermined second width, and the predetermined third width may be different from each other. In this case, the predetermined second width may be smaller than the predetermined first width, and the predetermined third width may be smaller than the predetermined second width. In other embodiments, at least two of the predetermined first width, the predetermined second width, and the predetermined third width may be the same as each other.

Further, the processor may determine that the electrode plate is defective if the distance between the third straight line and the electrode tab region exceeds a predetermined threshold. Here, the third straight line may be located downstream of the second straight line based on the process direction.

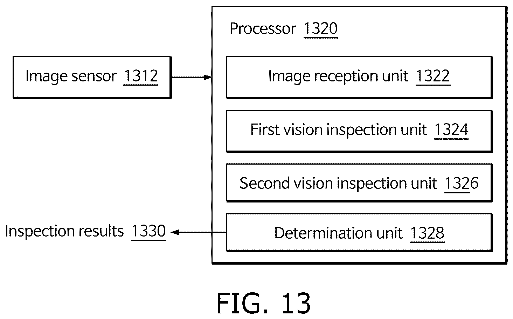

FIG. 13 is a block diagram showing the internal configuration of a processor 1320 in accordance with some embodiments of the present disclosure. The processor 1320 may be included in an information processing system (e.g., an electrode tab folding inspection system). The processor 1320 should be construed broadly to encompass general-purpose processors, central processing units (CPUs), microprocessors, digital signal processors (DSPs), controllers, microcontrollers, state machines, etc. In some environments, the processor 1320 may refer to application-specific integrated circuits (ASICs), programmable logic devices (PLDs), field programmable gate arrays (FPGAs), etc. The processor 1320 may also refer to a combination of processing devices such as, for example, a combination of a DSP and a microprocessor, a combination of a plurality of microprocessors, a combination of one or more microprocessors in combination with a DSP core, or a combination of any other such components.

Referring to FIG. 13, the processor 1320 of the information processing system may include an image reception unit 1322, a first vision inspection unit 1324, a second vision inspection unit 1326, and a determination unit 1328.

The image reception unit 1322 may receive an image that has captured an electrode plate on which an electrode tab is formed from an image sensor 1312. Here, the image may include an electrode plate region corresponding to the body of the electrode plate, which is the subject, and an electrode tab region corresponding to the electrode tab extending from the electrode plate. The image reception unit 1322 may transmit the received image to the first vision inspection unit 1324.

The first vision inspection unit 1324 may determine whether the width of the electrode tab region in the electrode tab region is less than a predetermined reference standard based on the image. For example, the first vision inspection unit may determine whether the width of the electrode tab region in the electrode tab region is less than a predetermined reference standard based on the image by utilizing the method described with reference to FIGS. 2 and 3. The first vision inspection unit 1324 may transmit determination result data to the determination unit 1328.

The determination unit 1328 may receive the determination result data from the first vision inspection unit 1324. The determination unit 1328 may determine the electrode plate as a target for electrode tab folding inspection if the width of the electrode tab region in the electrode tab region is less than the predetermined reference standard. In this case, the determination unit 1328 may transmit an electrode tab folding inspection request for the corresponding electrode plate image to the second vision inspection unit 1326. Further, if the width of the electrode tab region in the electrode tab region is greater than or equal to the predetermined reference standard, the determination unit 1328 may determine that the corresponding electrode plate is defective. The determination unit 1328 may output an inspection result 1330, which includes an electrode tab folding inspection target determination or a defective determination for the electrode plate to be inspected, to the user terminal. The user can check the inspection result 1330 displayed on the display of the user terminal.

The second vision inspection unit 1326 may perform an electrode tab folding inspection based on the image of the electrode plate determined as the target for the electrode tab folding inspection. For example, the second vision inspection unit 1326 may perform an electrode tab folding inspection based on the image of the electrode plate determined as the target for the electrode tab folding inspection in the methods described with reference to FIGS. 4 to 11.

The determination unit 1328 may receive the determination result data from the second vision inspection unit 1326. The determination unit 1328 may determine that the corresponding electrode plate is defective if the width of the electrode tab region in any one of the plurality of regions for the electrode tab region is less than a reference standard corresponding to that region. However, if the width of the electrode tab region in all of the plurality of regions for the electrode tab region is greater than or equal to the reference standard corresponding to that region, the determination unit 1328 may determine that the corresponding electrode plate is a non-defective product. The determination unit 1328 may output an inspection result 1330 including a non-defective product determination or defective determination for the electrode plate to be inspected to the user terminal. The user can check the inspection result 1330 displayed on the display of the user terminal.

Although not shown in FIG. 13, the processor 1320 may be connected to a memory. The memory should be construed broadly to encompass any electronic component capable of storing electronic information. The memory may also refer to various types of processor-readable media, such as random-access memory (RAM), read-only memory (ROM), nonvolatile random-access memory (NVRAM), programmable read-only memory (PROM), erasable-programmable read-only memory (EPROM), electrically erasable PROM (EEPROM), flash memory, magnetic or optical data storage, registers, etc. The memory is said to be in electronic communication with the processor 1320 if the processor can read information from and/or write information to the memory. The memory integrated into the processor 1320 is in electronic communication with the processor 1320.

In some embodiments, the memory may include any non-transitory computer-readable recording medium. According to some embodiments, the memory may include a permanent mass storage device. As another example, the permanent mass storage device may be included in the information processing system (e.g., the electrode tab fold inspection system) or may be included in a device that can be accessed with wire or wirelessly by the information processing system, as a separate persistent storage device distinct from the memory. As yet another example, the memory may be implemented by being included in the processor 1320.

According to some embodiments, the memory may store an operating system and at least one program code (e.g., program code for performing the electrode tab folding inspection). Further, the memory may store the image that has captured the electrode plate received from the image sensor 1312. Moreover, the memory may store the inspection results performed by the first vision inspection unit 1324 and the second vision inspection unit 1326 and the inspection results 1330 determined by the determination unit 1328.

Although the present disclosure has been described above with respect to embodiments thereof, the present disclosure is not limited thereto. Various modifications and variations can be made thereto by those skilled in the art within the scope of the present disclosure and the scope of the appended claims.

## Claims

1. A method (200, 400, 1200) of inspecting electrode tab folding performed by at least one processor (1320), comprising:
obtaining (S210, S1210) an image (500) that has captured an electrode plate (110) on which an electrode tab (112, 122) is formed, wherein the image (500) comprises an electrode plate region (502) and an electrode tab region (504);
dividing (S410) the electrode tab region (504) in the image (500) into a plurality of regions (510, 520, 530); and
performing (S220) an electrode tab folding inspection based on a width (W1, W2, W3) of the electrode tab region (504) in each of the plurality of regions (510, 520, 530).

2. The method (200, 400, 1200) as claimed in claim 1, wherein the plurality of regions (510, 520, 530) comprises a first region (510), a second region (520), and a third region (530), and wherein performing the electrode tab folding inspection comprises:
determining (450) that the electrode plate (110) is defective, in response to determining (S420) that a width (W1) of the electrode tab region (504) in the first region (510) is less than a predetermined first width, that (S430) a width (W2) of the electrode tab region (504) in the second region (520) is less than a predetermined second width, or that (S440) a width (W3) of the electrode tab region (504) in the third region(530) is less than a predetermined third width.

3. The method (200, 400, 1200) as claimed in claim 2, wherein the predetermined first width, the predetermined second width, and the predetermined third width are different from one another.

4. The method (200, 400, 1200) as claimed in claim 2 or 3, wherein the first region (510) is connected to the electrode plate region (502),
the second region (520) is disposed between the first region (510) and the third region (530),
the predetermined second width is smaller than the predetermined first width, and
the predetermined third width is smaller than the predetermined second width.

5. The method (200, 400, 1200) as claimed in any of claims 1 to 4, wherein dividing (S410) into the plurality of regions (510, 520, 530) comprises:
determining a plurality of straight lines (630, 712, 722, 750) associated with an outline of the electrode tab region (504); and
dividing the electrode tab region (504) into a predetermined number of regions (510, 520, 530) based on the plurality of straight lines.

6. The method (200, 400, 1200) as claimed in claim 5, wherein determining the plurality of straight lines comprises:
determining a first straight line (630) associated with one side of the electrode plate region (502);
determining a second straight line (712) and a third straight line (722) associated with a height of the electrode tab region (504); and
determining a fourth straight line (750) that is parallel to the first straight line (630) and is associated with an uppermost point (740) of the electrode tab region (504).

7. The method (200, 400, 1200) as claimed in claim 6, wherein determining the first straight line (630) comprises:
identifying a first point (622) and a second point (624) on the one side of the electrode plate region (502); and
determining the first straight line (630) by connecting the first point (622) and the second point (624), and
wherein the electrode tab region (504) is connected to the electrode plate region (502) on the one side.

8. The method (200, 400, 1200) as claimed in claim 6 or 7, wherein determining the second straight line (712) and the third straight line (722) comprises:
determining a first intersection (642) and a second intersection (644) where the first straight line (630) intersects two distinct points on the outline of the electrode tab region (504);
determining a third intersection (652) spaced apart from the first intersection (642) by a predetermined distance in a direction perpendicular to the first straight line (630);
determining a fourth intersection (654) spaced apart from the second intersection (644) by the predetermined distance in the direction perpendicular to the first straight line (630);
determining the second straight line (712) by connecting the first intersection (642) and the third intersection (652); and
determining the third straight line (722) by connecting the second intersection (644) and the fourth intersection (654).

9. The method (200, 400, 1200) as claimed in any of claims 6 to 8, wherein determining the fourth straight line (750) comprises:
identifying the uppermost point (740) of the electrode tab region (504) that is tangent to the second straight line (712) or the third straight line (722); and
determining the fourth straight line (750) that passes through the uppermost point (740) and is parallel to the first straight line (630).

10. The method (200, 400, 1200) as claimed in any of claims 6 to 9, wherein dividing the electrode tab region (304, 504) into the predetermined number of regions (510, 520, 530) based on the plurality of straight lines comprises:
dividing the electrode tab region (504) into N+1 regions (510, 520, 530) by placing N predetermined dividing lines between the first straight line (630) and the fourth straight line (750), wherein the N is a natural number.

11. The method (200, 400, 1200) as claimed in claim 10, wherein the N is equal to 2,
wherein the dividing the electrode tab region (504) into the N+1 regions (510, 520, 530) comprises:
determining a first dividing line (810) spaced apart from the fourth straight line(750) by a predetermined first distance (D1) in a direction of the electrode plate region(502); and
determining a second dividing line (820) spaced apart from the fourth straight line (750) by a predetermined second distance (D2) in the direction of the electrode plate region (502), and
wherein the first distance (D1) is greater than the second distance (D2).

12. The method (200, 400, 1200) as claimed in claim 11, wherein dividing the electrode tab region (504) into the N+1 regions (510, 520, 530) further comprises:
determining the electrode tab region (504) between the first straight line (630) and the first dividing line (810) as a first region (510);
determining the electrode tab region (504) between the first dividing line (810) and the second dividing line (820) as a second region (520); and
determining the electrode tab region (504) between the second dividing line (820) and the fourth straight line (750) as a third region (530).

13. The method (200, 400, 1200) as claimed in any of claims 6 to 12, further comprising:
determining that the electrode plate is defective if a distance (1110) between the third straight line (722) and the electrode tab region (504) exceeds a predetermined threshold.

14. The method (200, 400, 1200) as claimed in claim 1, wherein the plurality of regions (510, 520, 530) comprises a first region (510) and the second region (520), and
wherein performing the electrode tab folding inspection comprises:
determining an average length of widths of the electrode tab region (504) measured in the first region (510) as a width (310) of the electrode tab (112, 122) in the first region (510); and
determining an average length of widths of the electrode tab region (504) measured in the second region (520) as a width (310) of the electrode tab (112, 122) in the second region (520).

15. A system for inspecting electrode tab (112, 122) folding, comprising:
an image sensor (1312) configured to capture an electrode plate on which an electrode tab (112, 122) is formed;
a communication module;
a memory; and
at least one processor (1320) connected to the memory and configured to execute at least one computer-readable program included in the memory by carrying out steps of:
obtaining an image comprising an electrode plate region (502) and an electrode tab region (504) captured by the image sensor (1312),
dividing the electrode tab region (504) in the image into a plurality of regions (510, 520, 530), and
performing an electrode tab folding inspection based on a width (310) of the electrode tab region (504) in each of the plurality of regions (510, 520, 530).

## Patentansprüche

1. Verfahren (200, 400, 1200) zur Elektrodenlaschenfaltinspektion, durchgeführt von mindestens einem Prozessor (1320), umfassend:
Erhalten (S210, S1210) eines Bildes (500), das eine Elektrodenplatte (110) abbildet, auf der eine Elektrodenlasche (112, 122) ausgebildet ist, wobei das Bild (500) einen Elektrodenplattenbereich (502) und einen Elektrodenlaschenbereich (504) umfasst;
Unterteilen (S410) des Elektrodenlaschenbereichs (504) in dem Bild (500) in mehrere Bereiche (510, 520, 530); und
Durchführen (S220) einer Elektrodenlaschenfaltinspektion auf der Grundlage einer Breite (W1, W2, W3) des Elektrodenlaschenbereichs (504) in jedem der mehreren Bereiche (510, 520, 530).

2. Verfahren (200, 400, 1200) nach Anspruch 1, wobei die mehreren Bereiche (510, 520, 530) einen ersten Bereich (510), einen zweiten Bereich (520) und einen dritten Bereich (530) umfassen, und
wobei das Durchführen der Elektrodenlaschenfaltinspektion Folgendes umfasst:
Feststellen (450), dass die Elektrodenplatte (110) defekt ist, als Reaktion auf die Feststellung (S420), dass eine Breite (W1) des Elektrodenlaschenbereichs (504) im ersten Bereich (510) kleiner als eine vorbestimmte erste Breite ist, dass (S430) eine Breite (W2) des Elektrodenlaschenbereichs (504) im zweiten Bereich (520) kleiner als eine vorbestimmte zweite Breite ist oder dass (S440) eine Breite (W3) des Elektrodenlaschenbereichs (504) im dritten Bereich (530) kleiner als eine vorbestimmte dritte Breite ist.

3. Verfahren (200, 400, 1200) nach Anspruch 2, wobei die vorbestimmte erste Breite, die vorbestimmte zweite Breite und die vorbestimmte dritte Breite voneinander verschieden sind.

4. Verfahren (200, 400, 1200) nach Anspruch 2 oder 3, wobei der erste Bereich (510) mit dem Elektrodenplattenbereich (502) verbunden ist,
der zweite Bereich (520) zwischen dem ersten Bereich (510) und dem dritten Bereich (530) angeordnet ist,
die vorbestimmte zweite Breite kleiner als die vorbestimmte erste Breite ist und
die vorbestimmte dritte Breite kleiner als die vorbestimmte zweite Breite ist.

5. Verfahren (200, 400, 1200) nach einem der Ansprüche 1 bis 4, wobei das Unterteilen (S410) in die mehreren Bereiche (510, 520, 530) Folgendes umfasst:
Bestimmen mehrerer Geraden (630, 712, 722, 750), die einem Umriss des Elektrodenlaschenbereichs (504) zugeordnet sind; und
Unterteilen des Elektrodenlaschenbereichs (504) in eine vorbestimmte Anzahl von Bereichen (510, 520, 530) auf der Grundlage der mehreren Geraden.

6. Verfahren (200, 400, 1200) nach Anspruch 5, wobei das Bestimmen der mehreren Geraden Folgendes umfasst:
Bestimmen einer ersten Geraden (630), die einer Seite des Elektrodenplattenbereichs (502) zugeordnet ist;
Bestimmen einer zweiten Geraden (712) und einer dritten Geraden (722), die einer Höhe des Elektrodenlaschenbereichs (504) zugeordnet sind; und
Bestimmen einer vierten Geraden (750), die parallel zur ersten Geraden (630) verläuft und einem obersten Punkt (740) des Elektrodenlaschenbereichs (504) zugeordnet ist.

7. Verfahren (200, 400, 1200) nach Anspruch 6, wobei das Bestimmen der ersten Geraden (630) Folgendes umfasst:
Identifizieren eines ersten Punktes (622) und eines zweiten Punktes (624) auf der einen Seite des Elektrodenplattenbereichs (502); und
Bestimmen der ersten Geraden (630) durch Verbinden des ersten Punktes (622) und des zweiten Punktes (624), und
wobei der Elektrodenlaschenbereich (504) auf der einen Seite mit dem Elektrodenplattenbereich (502) verbunden ist.

8. Verfahren (200, 400, 1200) nach Anspruch 6 oder 7, wobei das Bestimmen der zweiten Geraden (712) und der dritten Geraden (722) Folgendes umfasst:
Bestimmen eines ersten Schnittpunkts (642) und eines zweiten Schnittpunkts (644), an denen die erste Gerade (630) zwei unterschiedliche Punkte auf dem Umriss des Elektrodenlaschenbereichs (504) schneidet;
Bestimmen eines dritten Schnittpunkts (652), der von dem ersten Schnittpunkt (642) um einen vorbestimmten Abstand in einer Richtung senkrecht zur ersten Geraden (630) beabstandet ist;
Bestimmen eines vierten Schnittpunkts (654), der von dem zweiten Schnittpunkt (644) um den vorbestimmten Abstand in der Richtung senkrecht zur ersten Geraden (630) beabstandet ist;
Bestimmen der zweiten Geraden (712) durch Verbinden des ersten Schnittpunkts (642) und des dritten Schnittpunkts (652); und
Bestimmen der dritten Geraden (722) durch Verbinden des zweiten Schnittpunkts (644) und des vierten Schnittpunkts (654).

9. Verfahren (200, 400, 1200) nach einem der Ansprüche 6 bis 8, wobei das Bestimmen der vierten Geraden (750) Folgendes umfasst:
Identifizieren des obersten Punktes (740) des Elektrodenlaschenbereichs (504), der die zweite Gerade (712) oder die dritte Gerade (722) tangiert; und
Bestimmen der vierten Geraden (750), die durch den obersten Punkt (740) verläuft und parallel zur ersten Geraden (630) ist.

10. Verfahren (200, 400, 1200) nach einem der Ansprüche 6 bis 9, wobei das Unterteilen des Elektrodenlaschenbereichs (304, 504) in die vorbestimmte Anzahl von Bereichen (510, 520, 530) auf der Grundlage der mehreren Geraden Folgendes umfasst:
Unterteilen des Elektrodenlaschenbereichs (504) in N+1 Bereiche (510, 520, 530) durch Anordnen von N vorbestimmten Trennlinien zwischen der ersten Geraden (630) und der vierten Geraden (750), wobei N eine natürliche Zahl ist.

11. Verfahren (200, 400, 1200) nach Anspruch 10, wobei N gleich 2 ist,
wobei das Unterteilen des Elektrodenlaschenbereichs (504) in die N+1 Bereiche (510, 520, 530) Folgendes umfasst:
Bestimmen einer ersten Trennlinie (810), die von der vierten geraden Linie (750) um einen vorbestimmten ersten Abstand (D1) in Richtung des Elektrodenplattenbereichs (502) beabstandet ist; und
Bestimmen einer zweiten Trennlinie (820), die von der vierten Geraden (750) um einen vorbestimmten zweiten Abstand (D2) in Richtung des Elektrodenplattenbereichs (502) beabstandet ist, und
wobei der erste Abstand (D1) größer ist als der zweite Abstand (D2).

12. Verfahren (200, 400, 1200) nach Anspruch 11, wobei das Unterteilen des Elektrodenlaschenbereichs (504) in die N+1 Bereiche (510, 520, 530) ferner Folgendes umfasst:
Bestimmen des Elektrodenlaschenbereichs (504) zwischen der ersten Geraden (630) und der ersten Trennlinie (810) als einen ersten Bereich (510);
Bestimmen des Elektrodenlaschenbereichs (504) zwischen der ersten Trennlinie (810) und der zweiten Trennlinie (820) als einen zweiten Bereich (520); und
Bestimmen des Elektrodenlaschenbereichs (504) zwischen der zweiten Trennlinie (820) und der vierten Geraden (750) als einen dritten Bereich (530).

13. Verfahren (200, 400, 1200) nach einem der Ansprüche 6 bis 12, umfassend ferner:
das Feststellen, dass die Elektrodenplatte defekt ist, wenn ein Abstand (1110) zwischen der dritten Geraden (722) und dem Elektrodenlaschenbereich (504) einen vorbestimmten Schwellenwert überschreitet.

14. Verfahren (200, 400, 1200) nach Anspruch 1, wobei die mehreren Bereiche (510, 520, 530) einen ersten Bereich (510) und den zweiten Bereich (520) umfassen, und
wobei das Durchführen der Elektrodenlaschenfaltinspektion Folgendes umfasst:
Bestimmen einer durchschnittlichen Länge der im ersten Bereich (510) gemessenen Breiten des Elektrodenlaschenbereichs (504) als eine Breite (310) der Elektrodenlasche (112, 122) im ersten Bereich (510); und
Bestimmen einer durchschnittlichen Länge der im zweiten Bereich (520) gemessenen Breiten des Elektrodenlaschenbereichs (504) als eine Breite (310) der Elektrodenlasche (112, 122) im zweiten Bereich (520).

15. System zur Inspektion der Faltung einer Elektrodenlasche (112, 122), umfassend:
einen Bildsensor (1312), der dazu konfiguriert ist, eine Elektrodenplatte zu erfassen, auf der eine Elektrodenlasche (112, 122) ausgebildet ist;
ein Kommunikationsmodul;
einen Speicher; und
mindestens einen Prozessor (1320), der mit dem Speicher verbunden und dazu konfiguriert ist, mindestens ein im Speicher enthaltenes, computerlesbares Programm durch Durchführen folgender Schritte auszuführen:
Erhalten eines Bildes, das einen Elektrodenplattenbereich (502) und einen Elektrodenlaschenbereich (504) umfasst, die vom Bildsensor (1312) erfasst werden,
Unterteilen des Elektrodenlaschenbereichs (504) im Bild in mehrere Bereiche (510, 520, 530) und
Durchführen einer Elektrodenlaschenfaltinspektion auf der Grundlage einer Breite (310) des Elektrodenlaschenbereichs (504) in jedem der mehreren Bereiche (510, 520, 530).

## Revendications

1. Procédé (200, 400, 1200) d'inspection de pliage de languette d'électrode réalisé par au moins un processeur (1320), comportant :
l'obtention (S210, S1210) d'une image (500) qui a capturé une plaque d'électrode (110) sur laquelle une languette d'électrode (112, 122) est formée, dans lequel l'image (500) comporte une région de plaque d'électrode (502) et une région de languette d'électrode (504) ;
la division (S410) de la région de languette d'électrode (504) dans l'image (500) en une pluralité de régions (510, 520, 530) ; et
la réalisation (S220) d'une inspection de pliage de languette d'électrode sur la base d'une largeur (W1, W2, W3) de la région de languette d'électrode (504) dans chacune de la pluralité de régions (510, 520, 530).

2. Procédé (200, 400, 1200) selon la revendication 1, dans lequel la pluralité de régions (510, 520, 530) comporte une première région (510), une deuxième région (520), et une troisième région (530), et
dans lequel la réalisation de l'inspection de pliage de languette d'électrode comporte :
la détermination (450) que la plaque d'électrode (110) est défectueuse, en réponse à la détermination (S420) qu'une largeur (W1) de la région de languette d'électrode (504) dans la première région (510) est inférieure à une première largeur prédéterminée, que (S430) une largeur (W2) de la région de languette d'électrode (504) dans la deuxième région (520) est inférieure à une deuxième largeur prédéterminée, ou que (S440) une largeur (W3) de la région de languette d'électrode (504) dans la troisième région (530) est inférieure à une troisième largeur prédéterminée.

3. Procédé (200, 400, 1200) selon la revendication 2, dans lequel la première largeur prédéterminée, la deuxième largeur prédéterminée et la troisième largeur prédéterminée sont différentes les unes des autres.

4. Procédé (200, 400, 1200) selon la revendication 2 ou 3, dans lequel la première région (510) est connectée à la région de plaque d'électrode (502),
la deuxième région (520) est disposée entre la première région (510) et la troisième région (530),
la deuxième largeur prédéterminée est inférieure à la première largeur prédéterminée, et
la troisième largeur prédéterminée est inférieure à la deuxième largeur prédéterminée.

5. Procédé (200, 400, 1200) selon l'une quelconque des revendications 1 à 4, dans lequel la division (S410) en la pluralité de régions (510, 520, 530) comporte :
la détermination d'une pluralité de lignes droites (630, 712, 722, 750) associées à un contour de la région de languette d'électrode (504) ; et
la division de la région de languette d'électrode (504) en un nombre prédéterminé de régions (510, 520, 530) sur la base de la pluralité de lignes droites.

6. Procédé (200, 400, 1200) selon la revendication 5, dans lequel la détermination de la pluralité de lignes droites comporte :
la détermination d'une première ligne droite (630) associée à un côté de la région de plaque d'électrode (502) ;
la détermination d'une deuxième ligne droite (712) et d'une troisième ligne droite (722) associées à une hauteur de la région de languette d'électrode (504) ; et
la détermination d'une quatrième ligne droite (750) qui est parallèle à la première ligne droite (630) et est associée à un point le plus haut (740) de la région de languette d'électrode (504).

7. Procédé (200, 400, 1200) selon la revendication 6, dans lequel la détermination de la première ligne droite (630) comporte :
l'identification d'un premier point (622) et d'un deuxième point (624) d'un côté de la région de plaque d'électrode (502) ; et
la détermination de la première ligne droite (630) en reliant le premier point (622) et le deuxième point (624), et
dans lequel la région de languette d'électrode (504) est connectée à la région de plaque d'électrode (502) d'un côté.

8. Procédé (200, 400, 1200) selon la revendication 6 ou 7, dans lequel la détermination de la deuxième ligne droite (712) et de la troisième ligne droite (722) comporte :
la détermination d'une première intersection (642) et d'une deuxième intersection (644) où la première ligne droite (630) croise deux points distincts sur le contour de la région de languette d'électrode (504) ;
la détermination d'une troisième intersection (652) espacée de la première intersection (642) d'une distance prédéterminée dans une direction perpendiculaire à la première ligne droite (630) ;
la détermination d'une quatrième intersection (654) espacée de la deuxième intersection (644) de la distance prédéterminée dans la direction perpendiculaire à la première ligne droite (630) ;
la détermination de la deuxième ligne droite (712) en reliant la première intersection (642) et la troisième intersection (652) ; et
la détermination de la troisième ligne droite (722) en reliant la deuxième intersection (644) et la quatrième intersection (654).

9. Procédé (200, 400, 1200) selon l'une quelconque des revendications 6 à 8, dans lequel la détermination de la quatrième ligne droite (750) comporte :
l'identification du point le plus haut (740) de la région de languette d'électrode (504) qui est tangente à la deuxième ligne droite (712) ou à la troisième ligne droite (722) ; et
la détermination de la quatrième ligne droite (750) qui traverse le point le plus haut (740) et est parallèle à la première ligne droite (630).

10. Procédé (200, 400, 1200) selon l'une quelconque des revendications 6 à 9, dans lequel la division de la région de languette d'électrode (304, 504) en le nombre prédéterminé de régions (510, 520, 530) sur la base de la pluralité de lignes droites comporte :
la division de la région de languette d'électrode (504) en N+1 régions (510, 520, 530) en plaçant N lignes de division prédéterminées entre la première ligne droite (630) et la quatrième ligne droite (750), dans lequel le N est un entier naturel.

11. Procédé (200, 400, 1200) selon la revendication 10, dans lequel le N est égal à 2,
dans lequel la division de la région de languette d'électrode (504) en les N+1 régions (510, 520, 530) comporte :
la détermination d'une première ligne de division (810) espacée de la quatrième ligne droite (750) d'une première distance (D1) prédéterminée dans une direction de la région de plaque d'électrode (502) ; et
la détermination d'une deuxième ligne de division (820) espacée de la quatrième ligne droite (750) d'une deuxième distance (D2) prédéterminée dans la direction de la région de plaque d'électrode (502), et
dans lequel la première distance (D1) est supérieure à la deuxième distance (D2).

12. Procédé (200, 400, 1200) selon la revendication 11, dans lequel la division de la région de languette d'électrode (504) en les N+1 régions (510, 520, 530) comporte en outre :
la détermination de la région de languette d'électrode (504) entre la première ligne droite (630) et la première ligne de division (810) en tant que première région (510) ;
la détermination de la région de languette d'électrode (504) entre la première ligne de division (810) et la deuxième ligne de division (820) en tant que deuxième région (520) ; et
la détermination de la région de languette d'électrode (504) entre la deuxième ligne de division (820) et la quatrième ligne droite (750) en tant que troisième région (530).

13. Procédé (200, 400, 1200) selon l'une quelconque des revendications 6 à 12, comportant en outre :
la détermination que la plaque d'électrode est défectueuse si une distance (1110) entre la troisième ligne droite (722) et la région de languette d'électrode (504) dépasse un seuil prédéterminé.

14. Procédé (200, 400, 1200) selon la revendication 1, dans lequel la pluralité de régions (510, 520, 530) comporte une première région (510) et la deuxième région (520), et
dans lequel la réalisation de l'inspection de pliage de languette d'électrode comporte :
la détermination d'une longueur moyenne de largeurs de la région de languette d'électrode (504) mesurée dans la première région (510) en tant que largeur (310) de la languette d'électrode (112, 122) dans la première région (510) ; et
la détermination d'une longueur moyenne de largeurs de la région de languette d'électrode (504) mesurée dans la deuxième région (520) en tant que largeur (310) de la languette d'électrode (112, 122) dans la deuxième région (520).

15. Système pour inspecter le pliage d'une languette d'électrode (112, 122), comportant :
un capteur d'image (1312) configuré pour capturer une plaque d'électrode sur laquelle une languette d'électrode (112, 122) est formée ;
un module de communication ;
une mémoire ; et
au moins un processeur (1320) connecté à la mémoire et configuré pour exécuter au moins un programme lisible par ordinateur inclus dans la mémoire en effectuant les étapes :
d'obtention d'une image comportant une région de plaque d'électrode (502) et une région de languette d'électrode (504) capturées par le capteur d'image (1312),
de division de la région de languette d'électrode (504) dans l'image en une pluralité de régions (510, 520, 530), et
de réalisation d'une inspection de pliage de languette d'électrode sur la base d'une largeur (310) de la région de languette d'électrode (504) dans chacune de la pluralité de régions (510, 520, 530).
